# EUROPÄISCHE PATENTSCHRIFT

(11) **EP 2 549 295 B1**
(45) Veröffentlichungstag und Bekanntmachung des Hinweises auf die Patenterteilung: **31.05.2017**
(21) Anmeldenummer: 12171585.8
(22) Anmeldetag: 12.06.2012
(51) Int. Cl.: G01S 15/93, G01S 15/87, H04L 7/00

(54) **Sensorvorrichtung für ein Kraftfahrzeug, Kraftfahrzeug und Verfahren zum Betreiben von zumindest zwei Sensoren in einem Kraftfahrzeug**
Sensor device for a motor vehicle, motor vehicle and method for operating at least two sensors in a motor vehicle
Dispositif de capteur pour un véhicule automobile, véhicule automobile et procédé de fonctionnement d'au moins deux capteurs dans un véhicule automobile

(30) Priorität: 16.07.2011 DE 102011107944
(43) Veröffentlichungstag der Anmeldung: 23.01.2013
(73) Patentinhaber: Valeo Schalter und Sensoren GmbH, 74321 Bietigheim-Bissingen (DE)
(72) Erfinder: Hallek, Michael, 71717 Beilstein (DE); Grüdl, Dietmar, 71679 Asperg (DE)

(56) Entgegenhaltungen:
- EP-A1- 2 455 779
- EP-A2- 1 193 913
- EP-A2- 2 527 869
- DE-A1-102005 056 800
- DE-A1-102008 045 190

## Beschreibung

Die Erfindung betrifft einen Sensorvorrichtung für ein Kraftfahrzeug, welche mindestens einen ersten Sensor und einen zweiten Sensor aufweist, die jeweils zum Erfassen von Umgebungsinformationen des Kraftfahrzeugs ausgebildet sind, etwa zum Erfassen eines Abstands zu einem fahrzeugexternen Objekt. Die Sensorvorrichtung beinhaltet auch eine Steuereinheit, welche die beiden Sensoren ansteuert. Bei den Sensoren handelt es sich um eine ganz spezifische Kombination von Sensoren: Der erste Sensor ist ein busfähiger Sensor, während der zweite Sensor ein herkömmlicher Sensor ist, welcher unabhängig von einem Bussystem betrieben wird. Die Steuereinheit ist über einen Fahrzeugbus zum Übertragen von Steuerdaten mit dem ersten Sensor sowie über eine von dem Fahrzeugbus verschiedene elektrische (direkte) Signalleitung mit dem zweiten Sensor gekoppelt. Die Sensorvorrichtung umfasst auch einen der Steuereinheit zugeordneten Zeitmesser zur Vorgabe eines Zeitsignals bzw. Taktsignals, wobei unter Berücksichtigung des Zeitsignals ein Triggersignal mittels der Steuereinheit erzeugbar bzw. erzeugt wird und über die Signalleitung an den zweiten Sensor abgebbar ist bzw. abgegeben wird. Mit dem Triggersignal wird ein Messvorgang des zweiten Sensors ausgelöst. Die Erfindung betrifft außerdem ein Kraftfahrzeug mit einer solchen Sensorvorrichtung, wie auch ein Verfahren zum Betreiben von mindestens zwei derartigen Sensoren in einem Kraftfahrzeug, jeweils zum Erfassen von Umgebungsinformationen des Kraftfahrzeugs.

Vorliegend geht es insbesondere um Ultraschallsensoren, nämlich um eine Kombination aus zumindest einem busfähigen Ultraschallsensors und einem herkömmlichen bzw. busunfähigen Ultraschallsensor. Ultraschallsensoren werden allgemein bei (Ein-)Parkhilfesystemen für Kraftfahrzeuge eingesetzt.

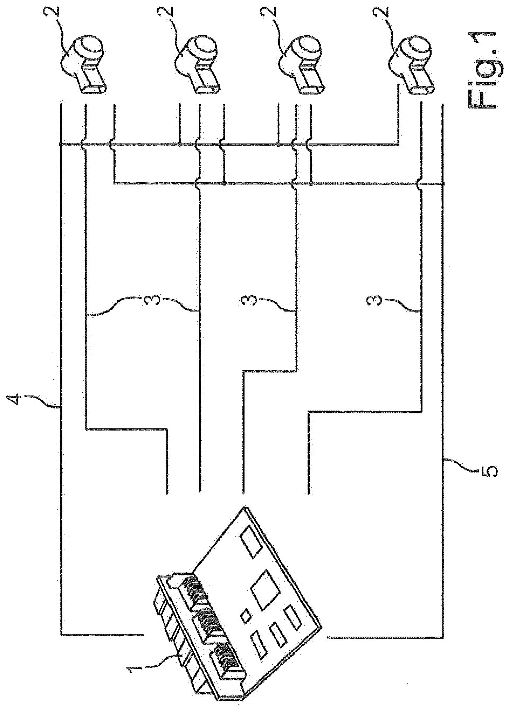

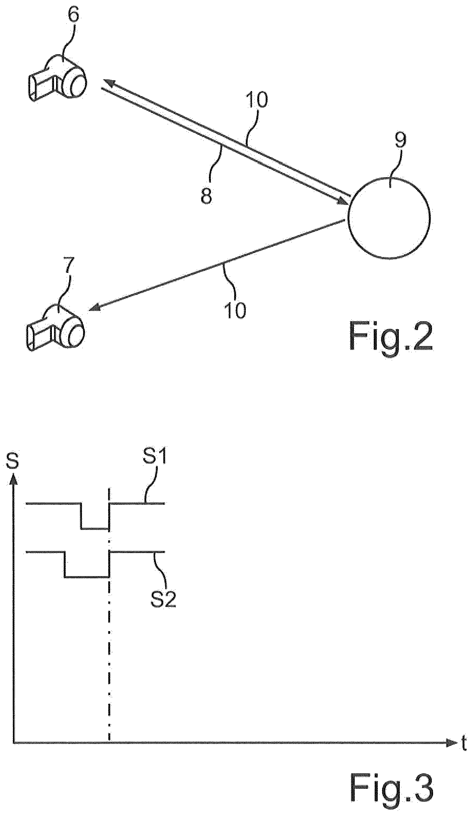

Es sind bereits Parkhilfesysteme bekannt, welche eine Vielzahl von herkömmlichen Ultraschallsensoren beinhalten, welche unabhängig von einem Kommunikationsbus im Kraftfahrzeug betrieben werden. Ein derartiges Parkhilfesystem umfasst eine Steuereinheit (Steuergerät), welche über separate Signalleitungen mit den Ultraschallsensoren elektrisch direkt verbunden ist. Ein derartiges Parkhilfesystem gemäß dem Stand der Technik ist beispielsweise in Fig. 1 dargestellt. Dieses System beinhaltet ein Steuergerät 1, wie auch eine Vielzahl von Ultraschallsensoren 2, die jeweils über eine Signalleitung 3 mit dem Steuergerät 1 elektrisch verbunden sind. Die herkömmlichen Ultraschallsensoren 2 werden über Versorgungsleitungen 4, 5 mit elektrischer Energie versorgt. Zwischen den Versorgungsleitungen 4, 5 liegt dabei eine elektrische Versorgungsspannung an (Gleichspannung); die Versorgungsleitung 4 ist mit einem positiven elektrischen Potential gekoppelt, während an der Versorgungsleitung 5 ein elektrisches Bezugspotential (Masse) bereitgestellt ist. Über die Signalleitungen 3 werden Informationen bzw. Daten zwischen dem Steuergerät 1 einerseits und den jeweiligen Ultraschallsensoren 2 andererseits ausgetauscht. Die Signalleitungen 3 werden nicht nur für die Kommunikation verwendet, sondern dienen auch zur Synchronisierung der angeschlossenen Ultraschallsensoren 2 untereinander, also zum Triggern der Ultraschallsensoren 2. Es wird bei den Messungen im Allgemeinen zwischen so genannten direkten sowie indirekten Messungen (bzw. direkten und indirekten Signalwegen) unterschieden: Bei einem direkten Signalweg sendet ein erster Ultraschallsensor 2 eine Schallwelle aus, welche dann von einem Objekt reflektiert und wiederum von demselben Ultraschallsensor 2 empfangen wird. Bei einem indirekten Signalweg wiederum geht es um eine so genannte Kreuzmessung, bei welcher ein Ultraschallsensor 2 eine Schallwelle aussendet, die von einem Objekt reflektierte Schallwelle jedoch von einem anderen - zum Beispiel benachbarten - Ultraschallsensor 2 empfangen wird. Ein Szenario zur Erläuterung des Unterschieds zwischen einer direkten und einer indirekten Messung ist in Fig. 2 dargestellt. Wie bereits ausgeführt, wird bei einer direkten Messung eine Schallwelle 8 von einem Ultraschallsensor 6 ausgesendet; diese Schallwelle 8 reflektiert dann an einem Objekt 9, und derselbe Ultraschallsensor 6 empfängt dann eine vom Objekt 9 reflektierte Schallwelle 10. Bei einer indirekten Messung wird die vom Objekt 9 reflektierte Schallwelle 10 von einem anderen Ultraschallsensor 7 empfangen.

Bei jeder - sei es direkten oder indirekten - Messung wird die Laufzeit der Schallwelle zwischen einem Sendezeitpunkt und einem Empfangszeitpunkt bestimmt und unter Berücksichtigung der Ausbreitungsgeschwindigkeit des Schalls in eine Entfernung des Objekts vom Kraftfahrzeug umgerechnet. Insbesondere für eine indirekte Messung ist es erforderlich, dass alle beteiligten Sensoren den Sendezeitpunkt kennen bzw. die Ultraschallwellen zu demselben Zeitpunkt aussenden. Außerdem werden die empfangenen Ultraschallsignale jeweils mit einem "Zeitstempel" versehen, der sich stets auf einen Zeitmesser (Timer) des Steuergeräts beziehen muss. Dazu müssen die Ultraschallsensoren synchronisiert bzw. gleichzeitig getriggert werden. Dies gelingt mithilfe von Triggersignalen, weiche von dem Steuergerät an die Ultraschallsensoren übertragen werden. Wie in Fig. 3 dargestellt ist, werden die Triggersignale S(t) in Form von Impulsen mit jeweils einer vorbestimmten Länge ausgesendet. An jeden Ultraschallsensor 6, 7 (vgl. Fig. 2) wird dabei ein separates Triggersignal S1, S2 übertragen, und zwar jeweils in Form von Impulsen. Die Länge der Impulse gibt an, in welchem Modus der Ultraschallsensor 6, 7 betrieben werden soll, also als Sendesensor und/oder als Empfangssensor. Die steigenden Flanken der Impulse geben den Sendezeitpunkt an und dienen somit zur Synchronisation bzw. Triggerung der beiden Ultraschallsensoren 6, 7. Im Beispiel gemäß Fig. 3 bedeutet das Triggersignal S1 beispielsweise, dass der Ultraschallsensor 6 gemäß Fig. 2 das Schaltsignal sowohl senden als auch empfangen soll. Der kürzere Impuls des Triggersignals S2 bedeutet hingegen, dass der Ultraschallsensor 7 lediglich empfangen soll.

Aus dem Stand der Technik sind außerdem busfähige Sensoren bekannt, welche für weitere Funktionalitäten benötigt werden. Solche Sensoren müssen beispielsweise für eine "Totwinkelüberwachung", ein Bremsassistenzsystem, wie auch für ACC-Systeme (Adaptive Cruise Control) und dergleichen eingesetzt werden. Bei diesen Funktionalitäten benötigt man nämlich meistens mehr Informationen als nur die Laufzeit des Schalls. Für die Übertragung dieser Informationen wird in der Regel ein Fahrzeugbus bzw. Datenbus verwendet, wie beispielsweise der CAN-Bus. Auch die Ansteuerung solcher Sensoren basiert hier auf CAN-Botschaften, weiche auch zur Synchronisation dienen. Die Synchronisation der Ultraschallsensoren erfolgt also über den Fahrzeugbus. Es ist auch möglich, dass die busfähigen Sensoren jeweils einen eigenen Zeitmesser beinhalten, der ein Zeitsignal zur Triggerung der jeweiligen Messvorgänge erzeugt. Eine derartige Lösung ist beispielsweise aus der Druckschrift DE 10 2008 045 190 A1 bekannt.

Es ist Aufgabe der Erfindung, eine Lösung aufzuzeigen, wie bei einer Sensorvorrichtung der eingangs genannten Gattung mit zumindest einem busfähigen Sensor und mindestens einem herkömmlichen Sensor eine indirekte Messung (Kreuzmessung) mit den beiden Sensoren ermöglicht werden kann.

Diese Aufgabe wird erfindungsgemäß durch eine Sensorvorrichtung mit den Merkmalen gemäß Patentanspruch 1, wie auch durch ein Kraftfahrzeug mit den Merkmalen gemäß Patentanspruch 11 sowie durch ein Verfahren mit den Merkmalen gemäß Patentanspruch 12 gelöst. Vorteilhafte Ausführungen der Erfindung sind Gegenstand der abhängigen Patentansprüche, der Beschreibung und der Figuren.

Eine erfindungsgemäße Sensorvorrichtung für ein Kraftfahrzeug umfasst mindestens einen ersten Sensor, welcher über einen Fahrzeugbus zum Übertragen von Steuerdaten mit einer Steuereinheit gekoppelt ist, wie auch mindestens einen zweiten Sensor, welcher über eine von dem Fahrzeugbus verschiedene elektrische (direkte) Signalleitung mit der Steuereinheit gekoppelt ist. Die Sensorvorrichtung umfasst auch einen Zeitmesser (Timer), der ein Zeitsignal bzw. Taktsignal vorgibt. Die Steuereinheit erzeugt unter Berücksichtigung des Zeitsignals ein Triggersignal und gibt dieses Triggersignal über die Signalleitung an den zweiten (nicht busfähigen) Sensor ab, so dass der zweite Sensor mit dem Triggersignal in Abhängigkeit von dem Zeitsignal getriggert wird bzw. ein Messvorgang des zweiten Sensors ausgelöst wird. Auch der (busfähige) erste Sensor beinhaltet einen eigenen Zeitmesser (Timer), der ebenfalls ein Zeitsignal bereitstellt, mit weichem der erste Sensor getriggert bzw. ein Messvorgang des ersten Sensors ausgelöst wird. Die beiden Zeitmesser werden miteinander zeitlich synchronisiert.

Erfindungsgemäß ist somit vorgesehen, dass der busfähige (erste) Sensor einen Zeitmesser bzw. eine Uhr zur Triggerung der Messvorgänge des ersten Sensors aufweist und dieser Zeitmesser mit dem Zeitmesser der Steuereinheit zeitlich synchronisiert wird, so dass die aktuelle Zeit des Zeitmessers des ersten Sensors der Steuereinheit stets bekannt ist. Die Erfindung beruht dabei auf mehreren Erkenntnissen: Sie basiert zunächst auf der Erkenntnis, dass Kosten gespart werden können, wenn busfähige Ultraschallsensoren mit herkömmlichen Ultraschallsensoren kombiniert werden; denn es müssen insgesamt weniger busfähige Ultraschallsensoren eingesetzt werden. Der Erfindung liegt ferner die Erkenntnis zugrunde, dass im Stand der Technik eine indirekte Messung bzw. Kreuzmessung (vgl. Fig. 2) mit einer busfähigen und einem busunfähigen Sensor nicht möglich ist. Eine weitere Erkenntnis besteht darin, dass die indirekte Messung im Stand der Technik deshalb nicht möglich ist, weil die unterschiedlichen Sensoren miteinander nicht synchronisiert werden können, nämlich aufgrund von Verzögerungen in dem Fahrzeugbus. Der Erfindung liegt schließlich die Erkenntnis zugrunde, dass eine indirekte Messung mit zwei unterschiedlichen Sensoren dann durchgeführt werden kann, wenn der busfähige Sensor unter Umgehung des Fahrzeugbusses mithilfe eines Zeitmessers getriggert wird, der mit dem Zeitmesser der Steuereinheit synchronisiert wird. Die Erfindung verbindet somit die Vorteile eines busfähigen Sensors mit denen eines herkömmlichen Sensors und ermöglicht außerdem eine indirekte Messung bzw. eine Kreuzmessung zwischen dem busfähigen und dem herkömmlichen Sensor. Bei der erfindungsgemäßen Sensorvorrichtung können somit Kosten gespart werden, weil nicht nur teure Sensoren (busfähige Sensoren) verbaut werden müssen, sondern auch herkömmliche Sensoren eingesetzt werden können. Aufgrund der möglichen Kreuzmessung kann eine bessere Abdeckung des Detektionsbereichs ermöglicht werden, und es findet keine gegenseitige Beeinflussung der beiden Sensoren statt, da die beiden Sensoren synchronisiert werden und ein Messstart innerhalb einer bereits laufenden Messung unterbunden wird.

Vorzugsweise werden die beiden Zeitmesser mittels eines Synchronisationssignals miteinander synchronisiert, welches an den ersten Sensor über eine elektrische Versorgungsleitung übertragen wird, über welche der erste Sensor auch mit elektrischer Energie versorgt wird. Somit hat diese elektrische Versorgungsleitung zwei unterschiedliche Funktionen: einerseits die Funktion der Versorgung des ersten Sensors mit elektrischer Energie und andererseits auch die Funktion der Synchronisation der Zeitmesser. Das Synchronisationssignal kann beispielsweise auf die Versorgungsleitung ohne viel Aufwand aufmoduliert werden. Es erweist sich dabei als besonders vorteilhaft, wenn die Synchronisation der beiden Zeitmesser durch die Steuereinheit mittels Ein/Ausschalten des ersten Sensors vorgenommen wird. Und zwar ist in einer Ausführungsform vorgesehen, dass zur Synchronisation der Zeitmesser die elektrische Versorgung des ersten Sensors für eine vorbestimmte, kurze Zeitdauer unterbrochen, der erste Sensor also von einer elektrischen Spannungsquelle entkoppelt und mit der Spannungsquelle gleich wieder verbunden wird. Beim Einschalten der Versorgungsspannung wird der Zeitmesser nämlich wieder bei Null beginnen, so dass der Steuereinheit exakt bekannt ist, wann dieser Zeitmesser mit der Messung der Zeit angefangen hat. Somit kann die Steuereinheit einen Gleichlauf der beiden Zeitmesser ohne viel Aufwand gewährleisten.

Mit den beiden Sensoren wird also eine Kreuzmessung ermöglicht: Die Steuereinheit kann die Sensoren zur Detektion eines fahrzeugexternen Objekts derart ansteuern, dass zumindest einer der Sensoren als Sendesensor ein Sendesignal zu einem Sendezeitpunkt aussendet und zumindest der jeweils andere Sensor als Empfangssensor ein von dem Objekt reflektiertes Signal empfängt. Dieses empfangene Signal wird dann mit einem Zeitstempel versehen, der sich auf ein und dieselbe Zeit der beiden miteinander synchronisierten Zeitmesser bezieht, so dass eine höchstgenaue Kreuzmessung gewährleistet ist. Der Sendezeitpunkt wird dem zweiten Sensor über die Signalleitung mittels des Triggersignals signalisiert bzw. der zweite Sensor wird über die Signalleitung getriggert; der erste Sensor wiederum kann über den zukünftigen Sendezeitpunkt bereits vor dem Messvorgang informiert werden, nämlich über den Fahrzeugbus. Einerseits wird durch die Kreuzmessung ein relativ großer Erfassungsbereich der Sensorvorrichtung abgedeckt; andererseits wird durch die Signalisierung des Sendezeitpunkts erreicht, dass ein Aussenden eines Sendesignals innerhalb einer bereits laufenden Messung unterbunden werden kann. Des Weiteren ist somit der Sendezeitpunkt in den beiden Sensoren bekannt und der Empfangszeitpunkt bezieht sich auf die gemeinsame Zeit, sodass auch die Laufzeit des Signals auch bei der Kreuzmessung ermittelt werden kann.

Es kann im Prinzip zumindest zwischen den folgenden Fällen unterschieden werden: Einerseits kann der erste (busfähige) Sensor als Sendesensor betrieben werden und ein Sendesignal zum Sendezeitpunkt aussenden, und der zweite (herkömmliche) Sensor kann als Empfangssensor dienen und das von einem Objekt reflektierte Signal als Empfangssignal empfangen. Dann ist durch die Synchronisation der beiden Zeitmesser gewährleistet, dass der erste Sensor das Sendesignal genau zu dem durch die Steuereinheit vorbestimmten und dem ersten Sensor mitgeteilten Sendezeitpunkt aussendet - die Steuereinheit kennt den Sendezeitpunkt und kann die Laufzeit des (Schall-)Signals und somit den Abstand zum Objekt bestimmen. Werden wiederum der erste Sensor als Empfangssensor und der zweite Sensor als Sendesensor betrieben, so ermöglicht die Synchronisation der beiden Zeitmesser, dass das vom ersten Sensor empfangene Signal mit einem Zeitstempel versehen wird, der sich auf das synchronisierte Zeitsignal bezieht. Auch in diesem Falle ist eine präzise Laufzeitmessung gewährleistet.

Vorzugsweise beinhalten die über den Fahrzeugbus an den ersten Sensor übertragenen Steuerdaten eine Information über den Sendezeitpunkt, und diese Information wird an den ersten Sensor zeitlich vor der Übertragung des Triggersignals an den zweiten Sensor übertragen. Somit ist dem ersten Sensor bekannt, wann der gemeinsame Messvorgang bzw. die Kreuzmessung beginnt bzw. wann er das Sendesignal gegebenenfalls aussenden soll.

An den zweiten Sensor kann die Steuereinheit einen Impuls als Triggersignal abgeben, und der Sendezeitpunkt kann mit einer Flanke des Impulses signalisiert werden, nämlich insbesondere mit der steigenden Flanke. Diese Ausführungsform kann besonders aufwandsarm und wirkungsvoll implementiert werden, und der zweite Sensor kann ohne viel Aufwand zum Aussenden eines Sendesignals und/oder zum Empfangen des reflektierten Signals getriggert werden.

Das über die Signalleitung an den zweiten Sensor (herkömmlichen Sensor) übertragene Triggersignal kann im Wesentlichen zwei unterschiedliche Funktionen aufweisen: einerseits die Funktion der Synchronisation und andererseits auch die Funktion eines Informationsträgers. Dieses Triggersignal kann nämlich eine Information an den zweiten Sensor beinhalten, ob zur Detektion des Objekts der zweite Sensor ein Sendesensor und/oder ein Empfangssensor ist, also ob der zweite Sensor das Sendesignal aussenden soll und/oder das vom Objekt reflektierte Signal empfangen soll. Das Triggersignal ist hier somit ein multifunktionelles Signal, sodass sich die Übertragung weiterer Steuerbefehle an den zweiten Sensor erübrigt. Die genannte Information kann beispielsweise über die Länge und/oder die Höhe des jeweiligen Impulses geliefert werden.

Der erste Sensor hingegen kann über seine Funktion für die gemeinsame Kreuzmessung mittels des Fahrzeugbusses informiert werden. Die über den Fahrzeugbus an den ersten Sensor übertragenen Steuerdaten können also eine Information an den ersten Sensor beinhalten, ob bei der Kreuzmessung der erste Sensor als Sendesensor und/oder als Empfangssensor dienen soll, also ob der erste Sensor das Sendesignal aussenden und/oder das reflektierte Signal empfangen soll. Somit wird der im Kraftfahrzeug ohnehin vorhandene Fahrzeugbus zur Übertragung der Steuerbefehle an den ersten Sensor verwendet.

Wenn mit dem Triggersignal der Sendezeitpunkt dem zweiten Sensor signalisiert bzw. der zweite Sensor getriggert und die Kreuzmessung somit eingeleitet werden soll, so sollte auch gewährleistet werden, dass zu diesem Sendezeitpunkt der erste Sensor seine Funktion bei der Kreuzmessung kennt, also ob er als Sendesensor und/oder als Empfangssensor verwendet wird. Aus diesem Grund ist in einer Ausführungsform vorgesehen, dass die Steuereinheit die Steuerdaten über den Fahrzeugbus an den ersten Sensor zeitlich vor der Übertragung des Triggersignals an den zweiten Sensor sendet.

Bevorzugt sind die Sensoren Ultraschallsensoren.

Ein erfindungsgemäßes Kraftfahrzeug beinhaltet eine erfindungsgemäße Sensorvorrichtung oder eine bevorzugte Ausgestaltung davon.

Ein erfindungsgemäßes Verfahren ist zum Betreiben von mindestens zwei Sensoren in einem Kraftfahrzeug ausgelegt, wobei mindestens einer der Sensoren ein busfähiger Sensor und mindestens einer der Sensoren ein herkömmlicher bzw. nicht busfähiger Sensor sind. Es werden Steuerdaten von einer Steuereinheit über einen Fahrzeugbus an einen ersten der Sensoren übertragen. Ein Zeitsignal wird mittels eines der Steuereinheit zugeordneten Zeitmessers erzeugt. Die Steuereinheit steuert den zweiten Sensor über eine von dem Fahrzeugbus verschiedene elektrische Signalleitung durch Übertragen eines unter Berücksichtigung des Zeitsignals erzeugten Triggersignals an den zweiten Sensor an, wobei mit dem Triggersignal ein Messvorgang des zweiten Sensors ausgelöst wird. Mittels eines Zeitmessers des ersten Sensors wird ein Zeitsignal zur Triggerung eines Messvorgangs des ersten Sensors bereitgestellt, und der Zeitmesser des ersten Sensors wird mit dem Zeitmesser der Steuereinheit synchronisiert.

Die mit Bezug auf die erfindungsgemäße Sensorvorrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Dabei zeigen:
- Fig. 1: in schematischer Darstellung eine Sensorvorrichtung gemäß dem Stand der Technik;
- Fig. 2: in schematischer Darstellung ein Szenario zur Veranschaulichung des Unterschieds zwischen einer direkten und einer indirekten Messung (Kreuzmessung);
- Fig. 3: einen zeitlichen Verlauf von Triggersignalen gemäß dem Stand der Technik;
- Fig. 4: in schematischer Darstellung eine Sensorvorrichtung für ein Kraftfahrzeug gemäß einer Ausführungsform der Erfindung; und
- Fig. 5: einen zeitlichen Verlauf von Triggersignalen, wobei ein Verfahren gemäß einer Ausführungsform der Erfindung näher erläutert wird.

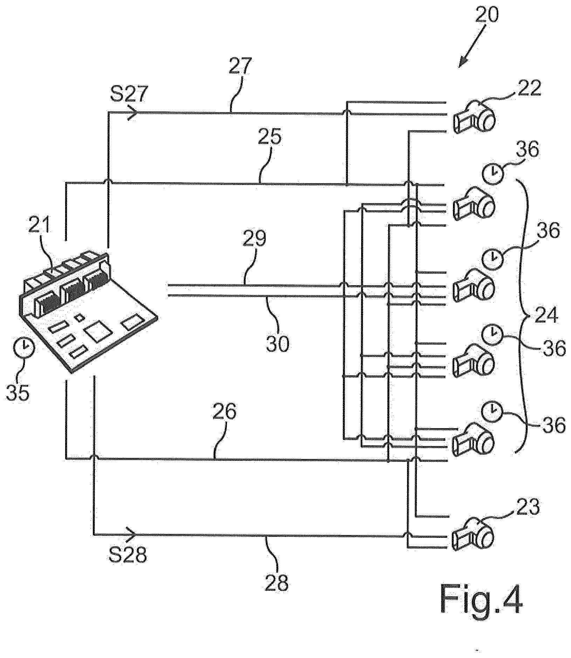

Fig. 4 zeigt in schematischer Darstellung eine Sensorvorrichtung 20 gemäß einer Ausführungsform der Erfindung. Die Sensorvorrichtung 20 umfasst eine Steuereinheit 21, welche ein Steuergerät mit einem digitalen Signalprozessor, einem Mikrocontroller und einem Speicher ist. Die Sensorvorrichtung 20 beinhaltet auch eine Vielzahl von Sensoren, die alle Ultraschallsensoren sind. Und zwar umfasst die Sensorvorrichtung 20 eine Vielzahl von ersten Sensoren 24, welche busfähige Ultraschallsensoren sind. Außerdem beinhaltet die Sensorvorrichtung 20 im Ausführungsbeispiel zwei zweite Sensoren 22, 23, weiche herkömmliche und nicht busfähige Ultraschallsensoren sind. Im Ausführungsbeispiel sind insgesamt vier busfähige Ultraschallsensoren 24 bereitgestellt, wobei die Anzahl der zweiten Sensoren 22, 23 sowie die Anzahl der ersten Sensoren 24 je nach Ausführungsform variieren kann. Die Sensoren 22, 23, 24 können beispielsweise an einem Stoßfänger eines Personenkraftwagens angebracht sein.

Alle Sensoren 22, 23, 24 werden über gemeinsame Versorgungsleitungen 25, 26 mit elektrischer Energie versorgt, nämlich von der Steuereinheit 21. Die Versorgungsleitung 25 liegt dabei an einem positiven elektrischen Potential an, während an der Versorgungsleitung 26 ein elektrisches Bezugspotential bereitgestellt ist, also Masse. Zwischen den Versorgungsleitungen 25, 26 liegt somit eine elektrische Versorgungsspannung an, die eine Gleichspannung ist.

Die herkömmlichen Sensoren 22, 23 sind jeweils über eine direkte Signalleitung 27, 28 mit der Steuereinheit 21 elektrisch gekoppelt. Über die Signalleitungen 27, 28 werden die zweiten Sensoren 22, 23 angesteuert, nämlich mittels der Steuereinheit 21. Die Signalleitungen 27, 28 dienen außerdem zur Synchronisation bzw. zum Triggern der zweiten Sensoren 22, 23.

Über die Signalleitungen 27, 28 können somit einerseits Steuerbefehle bzw. Steuerinformationen von der Steuereinheit 21 an die Sensoren 22, 23 sowie andererseits von den Sensoren 22, 23 gewonnene Messwerte an die Steuereinheit 21 übertragen werden.

Die ersten Sensoren 24 sind über einen Fahrzeugbus 29 mit der Steuereinheit 21 verbunden. Der Fahrzeugbus 29 ist beispielsweise der CAN-Bus. Es kann sich hier jedoch um einen beliebigen Kommunikationsbus des Kraftfahrzeugs handeln. Über den Fahrzeugbus 29 können Nachrichten zwischen der Steuereinheit 21 einerseits und den Sensoren 24 andererseits übertragen werden; es erfolgt eine bidirektionale Datenübertragung. Von der Steuereinheit 21 können an die Sensoren 24 beispielsweise Steuerbefehle bzw. Steuerinformationen übertragen werden, während von den Sensoren 24 Messergebnisse bzw. gemessene Umgebungsinformationen an die Steuereinheit 21 übermittelt werden können.

Zusätzlich zu dem Fahrzeugbus 29 ist auch eine elektrische Adressierungsleitung 30 bereitgestellt, welche die Steuereinheit 21 mit den ersten Sensoren 24 elektrisch verbindet. Alle ersten Sensoren 24 sind somit über die Adressierungsleitung 30 mit der Steuereinheit 21 elektrisch gekoppelt. Über die Adressierungsleitung werden die über den Fahrzeugbus 29 an die Sensoren 24 übertragenen Nachrichten adressiert. Mit anderen Worten wird über die Adressierungsleitung 30 signalisiert, welcher der Sensoren 24 die übertragenen Nachrichten empfangen soll bzw. für welchen der Sensoren 24 die momentan übertragenen Nachrichten bestimmt sind.

Nun richtet sich das Interesse auf eine so genannte Kreuzmessung, bei welcher zumindest einer der Sensoren 22, 23, 24 ein Sendesignal aussendet und zumindest ein anderer Sensor 22, 23, 24 das von einem Objekt reflektierte Signal empfängt. Vorliegend soll zumindest ein erster Sensor 24 sowie zumindest ein zweiter Sensor 22, 23 für die Kreuzmessung eingesetzt werden. Eine derartige Kreuzmessung hat den Vorteil, dass ein relativ großer Detektionsbereich bzw. Erfassungsbereich der Sensorvorrichtung 20 gewährleistet ist. Bei der Kreuzmessung müssen die beteiligten Sensoren 22, 23, 24 jedoch miteinander synchronisiert werden, sodass der Sendezeitpunkt - Zeitpunkt des Aussendens des Sendesignals - allen Sensoren 22, 23, 24 mitgeteilt wird und die empfangenen Schallsignale mit einem Zeitstempel versehen werden, der sich auf eine gemeinsame Zeit bzw. ein gemeinsames Taktsignal bezieht. Nur so ist eine genaue Laufzeitmessung gewährleistet.

Zum Zwecke der Synchronisation beinhaltet die Sensorvorrichtung 20 einen der Steuereinheit 21 zugeordneten Zeitmesser 35 (Timer), der ein Zeitsignal bzw. ein Taktsignal bereitstellt. Der Zeitmesser 35 kann dabei in der Steuereinheit 21 (im Mikrocontroller) angeordnet sein, nämlich wenn die Sensoren 22, 23 direkt mit der Steuereinheit 21 verbunden sind. Alternativ kann auch vorgesehen sein, dass ein Zeitmesser 35 in der Steuereinheit 21 und ein weiterer Zeitmesser zusätzlich noch in einem ASIC (anwendungsspezifische integrierte Schaltung, z.B. UPIT-ASIC) angeordnet sind. Hierbei können die Sensoren 22, 23 mit dem ASIC verbunden sein; und die Kommunikation zwischen dem ASIC und der Steuereinheit 21 kann über das so genannte SPI (Serial Peripheral Interface) erfolgen.

Also gibt der Zeitmesser 35 ein Zeitsignal vor. Die Steuereinheit 21 kann in Abhängigkeit von dem Zeitsignal jeweilige Triggersignale S27, S28 erzeugen und an die zweiten Sensoren 22, 23 abgeben, um die Sensoren 22, 23 zu triggern.

Auch die ersten Sensoren 24 beinhalten jeweils einen entsprechenden Zeitmesser 36, der ebenfalls ein Zeitsignal erzeugt, mit welchem die Messvorgänge der Sensoren 24 getriggert werden.

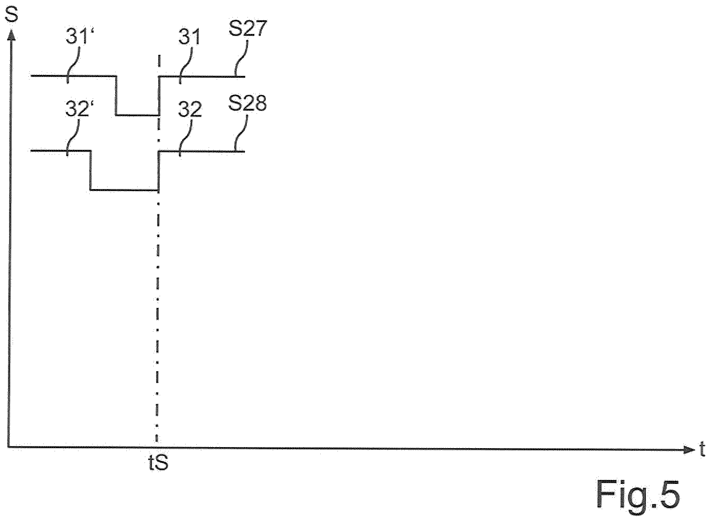

Ein Verfahren gemäß einer Ausführungsform der Erfindung wird nachfolgend unter Bezugnahme auf Fig. 5 näher erläutert:

Zunächst werden die Zeitmesser 36 mit dem Zeitmesser 35 der Steuereinheit 21 synchronisiert. Dies bedeutet, dass ein Gleichlauf aller Zeitmesser 35, 36 gewährleistet wird. Dafür sorgt die Steuereinheit 21, indem sie beispielsweise die Sensoren 24 für eine kurze Zeitdauer ausschaltet und dann wieder einschaltet. Dann beginnen die Zeitmesser 36 wieder bei Null zu laufen, und es ist der Steuereinheit 21 stets bekannt, wann die Zeitmesser 36 angefangen haben. Die Steuereinheit 21 kann dann den Gleichlauf der Zeitmesser 35 und 36 gewährleisten. Allgemein gesagt kann also ein Synchronisationssignal über die Versorgungsleitung 25 und/oder 26 an die ersten Sensoren 24 übertragen werden, so dass die Zeitmesser 35, 36 aufgrund dieses Synchronisationssignals miteinander synchronisiert werden.

Dann bestimmt die Steuereinheit 21 die Parameter der nachfolgenden Kreuzmessung: Die Steuereinheit 21 bestimmt den Zeitpunkt, zu welchem die Kreuzmessung eingeleitet werden soll, also einen Sendezeitpunkt tS, zu welchem die Sendesignale (Ultraschall) ausgesendet werden sollen. Die Steuereinheit 21 legt auch fest, welche der Sensoren 22, 23, 24 als Sendesensoren betrieben werden und das Sendesignal aussenden sollen sowie welche der Sensoren 22, 23, 24 als Empfangssensoren betrieben werden und somit die reflektierten Signale empfangen sollen.

Bevor die Triggersignale S27, S28 übertragen bzw. die Sensoren 22, 23 getriggert werden und die Kreuzmessung eingeleitet wird, werden über den Fahrzeugbus 29 an die Sensoren 24 Nachrichten bzw. Informationen übertragen. Und zwar werden an jeden Sensor 24 die zuvor festgelegten Parameter der Kreuzmessung übertragen: eine Information über den zukünftigen Sendezeitpunkt tS, wie auch eine Information, ob der jeweilige Sensor 24 als Sendesensor und/oder als Empfangssensor betrieben wird. Die Sensoren 24 empfangen also alle für die Kreuzmessung erforderlichen Informationen und können dann ihre Messvorgänge selbst steuern, nämlich unter Berücksichtigung der Zeitsignale der Zeitmesser 36.

Die busfähigen Sensoren 24 starten ihre Messvorgänge bzw. die gemeinsame Kreuzmessung selbstständig zu dem früher mitgeteilten Sendezeitpunkt tS. Sie brauchen mittels der Steuereinheit 21 nicht mehr getriggert zu werden.

Demgegenüber werden die herkömmlichen Sensoren 22, 23 durch die Steuereinheit 21 getriggert, und zwar zu dem früher festgelegten Sendezeitpunkt tS. In Fig. 5 sind Verläufe von Triggersignalen S über der Zeit t dargestellt, welche über die Signalleitungen 27, 28 an die zweiten Sensoren 22, 23 übertragen werden. Dargestellt ist das Triggersignal S27, welches über die Signalleitung 27 an den Sensor 22 übertragen wird, wie auch das Triggersignal S28, welches über die Signalleitung 28 an den Sensor 23 übertragen wird. Die Triggersignale S27, S28 beinhalten jeweils einen Impuls 31, 32, welcher zur Synchronisation bzw. Triggerung dient. Und zwar werden die Sensoren 22, 23 mit den jeweiligen Impulsen 31, 32 getriggert, so dass die Messung mit dem Empfang der Impulse 31, 32 gestartet wird. Dabei signalisieren die jeweiligen steigenden Flanken der Impulse 31, 32 den Sendezeitpunkt tS bzw. den Synchronisationszeitpunkt, zu welchem das Sendesignal ausgesendet werden soll. Mit anderen Worten wird die Kreuzmessung mit den steigenden Flanken der Impulse, also zum Sendezeitpunkt tS, eingeleitet. Die steigenden Flanken der Impulse 31, 32 fallen also alle zusammen, und zwar zu dem Sendezeitpunkt tS. Jeder Sensor 22, 23 weiß somit, wann das Sendesignal von dem Sendesensor ausgesendet wird.

Die Triggersignale S27 und S28 weisen auch eine zusätzliche Funktion auf: Mit den Triggersignalen S27, S28 werden auch Informationen an die herkömmlichen Sensoren 22, 23 übertragen, sodass diese Sensoren 22, 23 darüber informiert werden, ob sie bei der Kreuzmessung das Sendesignal aussenden und/oder das reflektierte Signal empfangen sollen. Diese Information wird mit dem jeweils vorhergehenden Impuls 31', 32' übermittelt. Dabei wird die Länge des jeweiligen Impulses 31', 32' variiert, Im Ausführungsbeispiel gemäß Fig. 5 dient der Sensor 22 beispielsweise sowohl als Sendesensor als auch als Empfangssensor, während der Sensor 23 lediglich als Empfangssensor dient.

Wird die Kreuzmessung zum Sendezeitpunkt tS eingeleitet, so senden die früher festgelegten Sensoren 22, 23, 24, die als Sendesensoren dienen, das jeweilige Sendesignal aus. Dieses Signal reflektiert dann an einem fahrzeugexternen Objekt und gelangt dann wieder zu den Sensoren 22, 23, 24, und zwar als Empfangssignal. Jeder Sensor 22, 23, 24, der bei dieser Kreuzmessung als Empfangssensor arbeitet, empfängt das jeweilige Empfangssignal, weiches mit einem Zeitstempel versehen wird. Dieser Zeitstempel bezieht sich auf die synchronisierten Zeitsignale, die bei jedem busfähigen Sensor 24 sowie bei der Steuereinheit 21 gleich sind. Damit ist eine höchstgenaue Messung der Laufzeit des Ultraschallsignals gewährleistet.

## Patentansprüche

1. Sensorvorrichtung (20) für ein Kraftfahrzeug, mit mindestens einem ersten Sensor (24) und einem zweiten Sensor (22, 23) jeweils zum Erfassen von Umgebungsinformationen des Kraftfahrzeugs, mit einer Steuereinheit (21) zum Ansteuern der Sensoren (22, 23, 24), welche über einen Fahrzeugbus (29) zum Übertragen von Steuerdaten mit dem ersten Sensor (24) sowie über eine von dem Fahrzeugbus (29) verschiedene elektrische Signalleitung (27, 28) mit dem zweiten Sensor (22, 23) gekoppelt ist, und mit einem der Steuereinheit (21) zugeordneten Zeitmesser (35) zur Vorgabe eines Zeitsignals, wobei unter Berücksichtigung des Zeitsignals ein Triggersignal (S27, S28) mittels der Steuereinheit (21) erzeugt und über die Signalleitung (27, 28) an den zweiten Sensor (22, 23) abgegeben wird, so dass mit dem Triggersignal (S27, S28) ein Messvorgang des zweiten Sensors (22, 23)ausgelöst wird, wobei der erste Sensor (24) einen Zeitmesser (36) zur Vorgabe eines Zeitsignals zur Triggerung eines Messvorgangs des ersten Sensors (24) aufweist und der Zeitmesser (36) des ersten Sensors (24) mit dem Zeitmesser (35) der Steuereinheit (21)synchronisiert wird.

2. Sensorvorrichtung (20) nach Anspruch 1,
**dadurch gekennzeichnet, dass**
die Steuereinheit (21) dazu ausgelegt ist, zur Synchronisation der beiden Zeitmesser (35, 36) ein Synchronisationssignal über eine Versorgungsleitung (25, 26) an den ersten Sensor (24) abzugeben, über welche der erste Sensor (24) mit elektrischer Energie versorgt wird.

3. Sensorvorrichtung (20) nach Anspruch 2,
**dadurch gekennzeichnet, dass**
die Steuereinheit (21) dazu ausgelegt ist, zur Synchronisation der beiden Zeitmesser (35, 36) den ersten Sensor (24) von einer elektrischen Spannungsquelle zu entkoppeln und mit der Spannungsquelle wieder zu verbinden.

4. Sensorvorrichtung (20) nach einem der vorhergehenden Ansprüche,
**dadurch gekennzeichnet, dass**
die Steuereinheit (21) dazu ausgelegt ist, die Sensoren (22, 23, 24) zur Detektion eines fahrzeugexternen Objektes (9) in einem gemeinsamen Messvorgang derart anzusteuern, dass zumindest einer der Sensoren (22, 23, 24) als Sendesensor ein Sendesignal zu einem Sendezeitpunkt (tS) aussendet und zumindest der jeweils andere Sensor (22, 23, 24) als Empfangssensor ein von dem Objekt (9) reflektiertes Signal empfängt, wobei mit dem Triggersignal (S27, S28) der Sendezeitpunkt (tS) dem zweiten Sensor (22, 23) signalisiert wird.

5. Sensorvorrichtung (20) nach Anspruch 4,
**dadurch gekennzeichnet, dass**
die über den Fahrzeugbus (29) an den ersten Sensor (24) übertragenen Steuerdaten eine Information über den Sendezeitpunkt (tS) beinhalten und diese Information an den ersten Sensor (24) zeitlich vor der Übertragung des Triggersignals (S27, S28) an den zweiten Sensor (22, 23) übertragen wird.

6. Sensorvorrichtung (20) nach Anspruch 4 oder 5,
**dadurch gekennzeichnet, dass**
die Steuereinheit (21) dazu ausgelegt ist, einen Impuls (31, 32) als Triggersignal (S27, S28) an den zweiten Sensor (22, 23) abzugeben, wobei der Sendezeitpunkt (tS) mit einer, insbesondere steigenden, Flanke des Impulses (31, 32) dem zweiten Sensor (22, 23) signalisiert wird.

7. Sensorvorrichtung (20) nach einem der Ansprüche 4 bis 6,
**dadurch gekennzeichnet, dass**
das über die elektrische Signalleitung (27, 28) an den zweiten Sensor (22, 23) übertragene Triggersignal (S27, S28) eine Information an den zweiten Sensor (22, 23) beinhaltet, ob zur Detektion des Objektes (9) der zweite Sensor (22, 23) ein Sendesensor und/oder ein Empfangssensor ist.

8. Sensorvorrichtung (20) nach einem der Ansprüche 4 bis 7,
**dadurch gekennzeichnet, dass**
die über den Fahrzeugbus (29) an den ersten Sensor (24) übertragenen Steuerdaten eine Information an den ersten Sensor (24) beinhalten, ob zur Detektion des Objektes (9) der erste Sensor (24) ein Sendesensor und/oder ein Empfangssensor ist.

9. Sensorvorrichtung (20) nach einem der vorhergehenden Ansprüche,
**dadurch gekennzeichnet, dass**
die Steuereinheit (21) dazu ausgelegt ist, zeitlich vor der Übertragung der Triggersignale (S27, S28, S30) die Steuerdaten über den Fahrzeugbus (29) an den ersten Sensor (24) zu übertragen.

10. Sensorvorrichtung (20) nach einem der vorhergehenden Ansprüche,
**dadurch gekennzeichnet, dass**
die Sensoren (22, 23, 24) Ultraschallsensoren sind.

11. Kraftfahrzeug mit einer Sensorvorrichtung (20) nach einem der vorhergehenden Ansprüche.

12. Verfahren zum Betreiben von mindestens zwei Sensoren (22, 23, 24) in einem Kraftfahrzeug, jeweils zum Erfassen von Umgebungsinformationen des Kraftfahrzeugs, durch:
- Übertragen von Steuerdaten von einer Steuereinheit (21) über einen Fahrzeugbus (29) an einen ersten Sensor (24),
- Erzeugen eines Zeitsignals mittels eines der Steuereinheit (21) zugeordneten Zeitmessers (35),
- Ansteuern eines zweiten Sensors (22, 23) über eine von dem Fahrzeugbus (29) verschiedene elektrische Signalleitung (27, 28) mittels der Steuereinheit (21) und hierbei Übertragen eines unter Berücksichtigung des Zeitsignals erzeugten Triggersignals (S27, S28) von der Steuereinheit (21) über die Signalleitung (27, 28) an den zweiten Sensor (22, 23), wobei mit dem Triggersignal (S27, S28) ein Messvorgang des zweiten Sensors (22, 23) ausgelöst wird,
wobei mittels eines Zeitmessers (36) des ersten Sensors (24) ein Zeitsignal zur Triggerung eines Messvorgangs des ersten Sensors (24) bereitgestellt wird und der Zeitmesser (36) des ersten Sensors (24) mit dem Zeitmesser (35) der Steuereinheit (21) synchronisiert wird.

## Claims

1. Sensor device (20) for a motor vehicle, having at least one first sensor (24) and one second sensor (22, 23) each for acquiring environmental information relating to the motor vehicle, having a control unit (21) for controlling the sensors (22, 23, 24), which control unit is coupled to the first sensor (24) via a vehicle bus (29) for transmitting control data and is coupled to the second sensor (22, 23) via an electrical signal line (27, 28) which is different from the vehicle bus (29), and having a timer (35) which is assigned to the control unit (21) and is intended to specify a time signal, a trigger signal (S27, S28) being generated by means of the control unit (21) taking into account the time signal and being output to the second sensor (22, 23) via the signal line (27, 28), with the result that the trigger signal (S27, S28) is used to initiate a measuring operation of the second sensor (22, 23), the first sensor (24) having a timer (36) for specifying a time signal for triggering a measuring operation of the first sensor (24), and the timer (36) of the first sensor (24) being synchronized with the timer (35) of the control unit (21).

2. Sensor device (20) according to Claim 1,
**characterized in that**
the control unit (21) is designed, for the purpose of synchronizing the two timers (35, 36), to output a synchronization signal to the first sensor (24) via a supply line (25, 26) which is used to supply the first sensor (24) with electrical energy.

3. Sensor device (20) according to Claim 2,
**characterized in that**
the control unit (21) is designed, for the purpose of synchronizing the two timers (35, 36), to decouple the first sensor (24) from an electrical voltage source and to connect it to the voltage source again.

4. Sensor device (20) according to one of the preceding claims,
**characterized in that**
the control unit (21) is designed, for the purpose of detecting an object (9) outside the vehicle, to control the sensors (22, 23, 24) in a joint measuring operation in such a manner that at least one of the sensors (22, 23, 24), as a transmitting sensor, emits a transmission signal at a transmission time (tS) and at least the respective other sensor (22, 23, 24), as a receiving sensor, receives a signal reflected by the object (9), the trigger signal (S27, S28) being used to signal the transmission time (tS) to the second sensor (22, 23).

5. Sensor device (20) according to Claim 4,
**characterized in that**
the control data transmitted to the first sensor (24) via the vehicle bus (29) contain an item of information relating to the transmission time (tS) and this information is transmitted to the first sensor (24) temporally before the trigger signal (S27, S28) is transmitted to the second sensor (22, 23).

6. Sensor device (20) according to Claim 4 or 5,
**characterized in that**
the control unit (21) is designed to output a pulse (31, 32) as the trigger signal (S27, S28) to the second sensor (22, 23), the transmission time (tS) being signalled to the second sensor (22, 23) with an edge, in particular a rising edge, of the pulse (31, 32).

7. Sensor device (20) according to one of Claims 4 to 6,
**characterized in that**
the trigger signal (S27, S28) transmitted to the second sensor (22, 23) via the electrical signal line (27, 28) contains an item of information for the second sensor (22, 23) relating to whether the second sensor (22, 23) is a transmitting sensor and/or a receiving sensor for the purpose of detecting the object (9).

8. Sensor device (20) according to one of Claims 4 to 7,
**characterized in that**
the control data transmitted to the first sensor (24) via the vehicle bus (29) contain an item of information for the first sensor (24) relating to whether the first sensor (24) is a transmitting sensor and/or a receiving sensor for the purpose of detecting the object (9).

9. Sensor device (20) according to one of the preceding claims,
**characterized in that**
the control unit (21) is designed to transmit the control data to the first sensor (24) via the vehicle bus (29) temporally before transmitting the trigger signals (S27, S28, S30).

10. Sensor device (20) according to one of the preceding claims,
**characterized in that**
the sensors (22, 23, 24) are ultrasonic sensors.

11. Motor vehicle having a sensor device (20) according to one of the preceding claims.

12. Method for operating at least two sensors (22, 23, 24) in a motor vehicle, each for acquiring environmental information relating to the motor vehicle, by:
- transmitting control data from a control unit (21) to a first sensor (24) via a vehicle bus (29),
- generating a time signal by means of a timer (35) assigned to the control unit (21),
- controlling a second sensor (22, 23) by means of the control unit (21) via an electrical signal line (27, 28) which is different from the vehicle bus (29) and in this case transmitting a trigger signal (S27, S28), which is generated taking into account the time signal, from the control unit (21) to the second sensor (22, 23) via the signal line (27, 28), the trigger signal (S27, S28) being used to initiate a measuring operation of the second sensor (22, 23),
a timer (36) of the first sensor (24) being used to provide a time signal for triggering a measuring operation of the first sensor (24), and the timer (36) of the first sensor (24) being synchronized with the timer (35) of the control unit (21).

## Revendications

1. Dispositif à capteurs (20) pour un véhicule automobile, comportant au moins un premier capteur (24) et un deuxième capteur (22, 23) respectivement destinés à détecter des informations d'environnement du véhicule automobile, comportant une unité de commande (21) destinée à commander les capteurs (22, 23, 24), qui est couplée au premier capteur (24) par l'intermédiaire d'un bus de véhicule (29) pour transmettre des données de commande et au deuxième capteur (22, 23) par l'intermédiaire d'une ligne de signal (27, 28) électrique différente du bus de véhicule (29), et comportant un dispositif de mesure de temps (35) associé à l'unité de commande (21) pour indiquer un signal de temps, dans lequel un signal de déclenchement (S27, S28) est généré en tenant compte du signal de temps au moyen de l'unité de commande (21) et est délivré par l'intermédiaire de la ligne de signal (27, 28) au deuxième capteur (22, 23) de manière à ce qu'un processus de mesure soit déclenché sur le deuxième capteur (22, 23) au moyen du signal de déclenchement (S27, S28), dans lequel le premier capteur (24) comporte un dispositif de mesure de temps (36) destiné à indiquer un signal de temps pour déclencher un processus de mesure sur le premier capteur (24) et dans lequel le dispositif de mesure de temps (36) du premier capteur (24) est synchronisé avec le dispositif de mesure de temps (35) de l'unité de commande (21).

2. Dispositif à capteurs (20) selon la revendication 1,
**caractérisé en ce que** l'unité de commande (21) est conçue pour délivrer un signal de synchronisation au premier capteur (24) à des fins de synchronisation des deux dispositifs de mesure (35, 36) par l'intermédiaire d'une ligne d'alimentation (25, 26) par l'intermédiaire de laquelle le premier capteur (24) est alimenté en énergie électrique.

3. Dispositif à capteurs (20) selon la revendication 2,
**caractérisé en ce que** l'unité de commande (21) est conçue pour découpler le premier capteur (24) d'une source de tension électrique à des fins de synchronisation des deux dispositifs de mesure (35, 36) et pour le connecter de nouveau à la source de tension.

4. Dispositif à capteurs (20) selon l'une quelconque des revendications précédentes,
**caractérisé en ce que** l'unité de commande (21) est conçue pour commander les capteurs (22, 23, 24) lors d'un processus de mesure commun à des fins de détection d'un objet (9) extérieur au véhicule de manière à ce qu'au moins l'un des capteurs (22, 23, 24), en tant que capteur d'émission, émette un signal d'émission à un instant d'émission (tS) et à ce qu'au moins l'autre capteur respectif (22, 23, 24), en tant que capteur de réception, reçoive un signal réfléchi par l'objet (9), dans lequel l'instant d'émission (tS) est signalé au deuxième capteur (22, 23) au moyen du signal de déclenchement (S27, S28).

5. Dispositif à capteurs (20) selon la revendication 4,
**caractérisé en ce que** les données de commande transmises par l'intermédiaire du bus de véhicule (29) au premier capteur (24) contiennent une information concernant l'instant d'émission (tS) et **en ce que** ladite information est transmise au premier capteur (24) à un instant précédant la transmission du signal de déclenchement (S27, S28) au deuxième capteur (22, 23).

6. Dispositif à capteurs (20) selon la revendication 4 ou 5,
**caractérisé en ce que** l'unité de commande (21) est conçue pour délivrer au deuxième capteur (22, 23) une impulsion (31, 32) en tant que signal de déclenchement (S27, S28), dans lequel l'instant d'émission (tS) est signalé au deuxième capteur (22, 23) au moyen d'un front, notamment montant, de l'impulsion (31, 32).

7. Dispositif à capteurs (20) selon l'une quelconque des revendications 4 à 6,
**caractérisé en ce que** le signal de déclenchement (S27, S28) transmis au deuxième capteur (22, 23) par l'intermédiaire de la ligne de signal électrique (27, 28) contient une information concernant le deuxième capteur (22, 23) indiquant si le deuxième capteur (22, 23) est un capteur d'émission et/ou un capteur de réception pour la détection de l'objet (9).

8. Dispositif à capteurs (20) selon l'une quelconque des revendications 4 à 7,
**caractérisé en ce que** les données de commande transmises au premier capteur (24) par l'intermédiaire du bus de véhicule (29) contiennent une information concernant le premier capteur (24) indiquant si le premier capteur (24) est un capteur d'émission et/ou un capteur de réception pour la détection de l'objet (9).

9. Dispositif à capteurs (20) selon l'une quelconque des revendications précédentes,
**caractérisé en ce que** l'unité de commande (21) est conçue pour transmettre au premier capteur (24) les données de commande par l'intermédiaire du bus de véhicule (29) à un instant précédant la transmission des signaux de déclenchement (S27, S28, S30).

10. Dispositif à capteurs (20) selon l'une quelconque des revendications précédentes,
**caractérisé en ce que** les capteurs (22, 23, 24) sont des capteurs à ultrasons.

11. Véhicule automobile comportant un dispositif à capteurs (20) selon l'une quelconque des revendications précédentes.

12. Procédé de mise en fonctionnement d'au moins deux capteurs (22, 23, 24) dans un véhicule automobile, chacun des capteurs étant destiné à détecter des informations d'environnement du véhicule automobile, consistant à :
- transmettre des données de commande par l'intermédiaire d'un bus de véhicule (29) d'une unité de commande (21) à un premier capteur (24),
- générer un signal de temps au moyen d'un dispositif de mesure de temps (35) associé à l'unité de commande (21),
- commander un deuxième capteur (22, 23) par l'intermédiaire d'une ligne de signal (27, 28) électrique différente du bus de véhicule (29) au moyen de l'unité de commande (21) et ainsi transmettre au deuxième capteur (22, 23) par l'intermédiaire de la ligne de signal (27, 28) un signal de déclenchement (S27, S28) généré par l'unité de commande (21) en tenant compte du signal de temps, dans lequel un processus de mesure est déclenché sur le deuxième capteur (22, 23) au moyen du signal de déclenchement (S27, S28),
dans lequel un signal de temps destiné à déclencher un processus de mesure sur le premier capteur (24) est fourni au moyen d'un dispositif de mesure de temps (36) du premier capteur (24) et le dispositif de mesure de temps (36) du premier capteur (24) est synchronisé avec le dispositif de mesure de temps (35) de l'unité de commande (21).
